(19) Europäisches Patentamt
European Patent Office
Office européen des brevets

(11)  **EP 4 400 247 B1**

(12)  **EUROPEAN PATENT SPECIFICATION**

(45) Date of publication and mention
of the grant of the patent:
**18.06.2025  Bulletin 2025/25**

(21) Application number: **23211448.8**

(22) Date of filing: **22.11.2023**

(51) International Patent Classification (IPC):
**B23K 26/03** (2006.01)     **B23K 26/08** (2014.01)

(52) Cooperative Patent Classification (CPC):
**B23K 26/0838; B23K 26/032**

(54)  **LASER PROCESSING METHOD AND LASER PROCESSING APPARATUS**

LASERBEARBEITUNGSVERFAHREN UND LASERBEARBEITUNGSVORRICHTUNG

PROCÉDÉ ET APPAREIL DE TRAITEMENT LASER

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **25.11.2022  JP 2022187982
25.10.2023  JP 2023183585**

(43) Date of publication of application:
**17.07.2024  Bulletin 2024/29**

(73) Proprietor: **Ricoh Company, Ltd.
Tokyo 143-8555 (JP)**

(72) Inventor: **SERIZAWA, Keiichi
Tokyo, 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
**US-A1- 2019 283 451**

**Description**

BACKGROUND

Technical Field

Embodiments of the present disclosure relate to a laser processing method and a laser processing apparatus.

Related Art

Japanese Unexamined Patent Application No. 2021-037685 discloses a method to process a workpiece, and the method can process the workpiece even when the conveyance velocity of the workpiece is different. However, Japanese Unexamined Patent Application No. 2021-037685 does not consider processing an object with high accuracy. Further, when at least a first object and a second object are conveyed in this order, and the objects are processed by a laser beam, the processing start time of the second object from the processing stop time of the first object may not be sufficiently obtained, and a defective product may be produced. Document US 2019/283451 discloses a laser processing apparatus having a trigger sensor configured to detect multiple workpieces sequentially conveyed by a workpiece conveying device at a workpiece detection position, and output a trigger signal every time a workpiece is detected.

SUMMARY

An object of the present disclosure is to provide a laser processing method that can prevent a defective product from occurring when at least a first object and a second object are conveyed in this order, and the objects are processed by a laser beam.

According to an embodiment of the present disclosure, a laser processing method includes: conveying a first object and a second object; detecting the first object conveyed to a predetermined position by a detector; detecting the second object conveyed to the predetermined position by the detector following the detecting the first object; determining a processing start position of the second object from: a period of time from a time of the detecting the first object to a time of the detecting the second object; a conveyance velocity of the first object; and a conveyance velocity of the second object; and scanning and irradiating the second object with a laser beam from the processing start position to a processing stop position within an effective lens diameter of a light condenser.

According to an embodiment of the present disclosure, a laser processing apparatus includes: a conveyor to convey at least a first object or a second object in this order; a laser device including: a laser light source to emit a laser beam; and a light condenser to condense the laser beam emitted from the laser light source to irradiate and process the first object and the second object with the laser beam; a detector to: detect the first object conveyed to a predetermined position; detect the second object conveyed to the predetermined position; and circuitry configured to determine a processing start position of the second object from: a period of time from a time the detector detecting the first object to a time the detector detecting the second object; a conveyance velocity of the first object by the conveyor; and a conveyance velocity of the second object by the conveyor. The laser device scans and irradiates the second object with the laser beam from the processing start position to the processing stop position within an effective lens diameter of the light condenser.

According to an embodiment of the present disclosure, a laser processing method can prevent a defective product from occurring when at l east a first object and a second object are conveyed in this order and the objects are processed by a laser beam.

BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 is a schematic diagram illustrating a laser processing apparatus according to a first embodiment of the present disclosure;
FIG. 2 is a schematic diagram illustrating a light condenser in a laser processing apparatus according to an embodiment of the present disclosure;
FIG. 3A is a schematic diagram illustrating a concave formed on the surface of a container body by changing the property of the container body by laser irradiation, according to an embodiment of the present disclosure;
FIG. 3B is a schematic diagram illustrating another concave formed on the surface of a container body by changing the property of the container body by laser irradiation, according to an embodiment of the present disclosure;

FIG. 3C is a schematic diagram illustrating a crystalized portion formed on the surface of a container body by changing the property of the container body by laser irradiation, according to an embodiment of the present disclosure;

FIG. 3D is a schematic diagram illustrating a foamed portion formed on the surface of a container body by changing the property of the container body by laser irradiation, according to an embodiment of the present disclosure;

FIG. 4 is a schematic diagram illustrating the processing start position of a first object in a laser processing method according to the first embodiment of the present disclosure;

FIG. 5 is a schematic diagram illustrating the first object while the processing is stopped, according to the first embodiment of the present disclosure;

FIG. 6 is a schematic diagram illustrating a condition about a distance L0 from the processing start position to the processing stop position in the laser processing method according to the first embodiment of the present disclosure;

FIG. 7 is a flowchart of laser processing in a laser processing method according to a second embodiment of the present disclosure;

FIG. 8A is a schematic diagram illustrating the minimum distance between a first object and a second object in laser processing, according to the second embodiment of the present disclosure;

FIG. 8B is a schematic diagram illustrating a third object to be conveyed in a conveyance direction following the first object and the second object, according to the second embodiment of the present disclosure;

FIG. 9A is a schematic diagram illustrating a specified second object processed from a processing start position to a processing stop position by a scanning laser beam, according to the second embodiment of the present disclosure;

FIG. 9B is a schematic diagram illustrating the specified second object and an effective lens diameter, according to the second embodiment of the present disclosure;

FIG. 10A is a schematic diagram illustrating the maximum distance between a first object and a second object and the distance between the second object and a third object, according to the second embodiment of the present disclosure;

FIG. 10B is a schematic diagram illustrating a third object to be conveyed in a conveyance direction following the first object and the second object, according to the second embodiment of the present disclosure;

FIG. 11A is a schematic diagram illustrating the laser processing of a specified second object processed from a processing start position to a processing stop position by a scanning laser beam, according to the second embodiment of the present disclosure;

FIG. 11B is a schematic diagram illustrating the specified second object and an effective lens diameter, according to the second embodiment of the present disclosure;

FIG. 12A is a schematic diagram illustrating the relation between an effective lens diameter and the minimum distance, according to the second embodiment of the present disclosure;

FIG. 12B is a schematic diagram illustrating the first object at the processing stop position and the relation between the first object and a second object, according to the second embodiment of the present disclosure;

FIG. 13A is a schematic diagram illustrating the relation between the effective lens diameter and a maximum distance, according to the second embodiment of the present disclosure;

FIG. 13B is a schematic diagram illustrating the maximum distance and the second object contacting with the third object, according to the second embodiment of the present disclosure;

FIG. 14A is a schematic diagram illustrating an arrangement of the objects in a configuration of multiple laser devices disposed in the conveyance direction in the laser processing method according to the second embodiment of the present disclosure;

FIG. 14B is a schematic diagram illustrating another arrangement of the objects moved by a distance from the configuration in FIG. 14A in the laser processing method according to the second embodiment of the present disclosure;

FIG. 15A is a schematic diagram illustrating an arrangement of objects in a configuration of multiple laser devices disposed in the conveyance direction in the laser processing method according to a third embodiment of the present disclosure; and

FIG. 15B is a schematic diagram illustrating another arrangement of the objects moved from the configuration in FIG. 15A in the laser processing method according to the third embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure. Any one of the above-described operations may be performed in various other ways, for example, in an order different from the one described above. The disclosure may therefore include any of these variations that fall within the scope of the appended claims.

Embodiments of the present disclosure will be described in detail below.

Laser Processing Method and Laser Processing Apparatus

In an embodiment of the present disclosure, a laser processing method conveys at least a first object and a second object in this order and processes multiple objects including the first object and the second object with a laser beam. The laser processing method includes: first detecting a conveyance of the first object conveyed at a predetermined position by a detector in the case where the first object is processed by the laser beam; second detecting a conveyance of the second object conveyed at the predetermined position by the detector in the case where the second object is processed by the laser beam; determining a processing start position of the second object based on an interval (i.e., a period of time) from a time to detect the first object to a time to detect the second object, a conveyance velocity of the first object, and a conveyance velocity of the second object; and irradiating the second object with the laser light by scanning the second object with the laser beam from the processing start position determined in the determining to a processing stop position within an effective diameter of a light condenser.

In an embodiment of the present disclosure, a laser processing apparatus conveys at least a first object and a second object in this order and processes multiple objects including the first object and the second object with a laser beam. The laser processing apparatus includes: a conveyor to convey at least the first object and the second object in this order; a laser device to process the multiple objects with a laser beam; a detector to detect the multiple objects; a determining device to determine a processing start position of the second object. The detector detects a conveyance of the first object conveyed at a predetermined position in the case where the first object is processed by the laser beam and a conveyance of the second object conveyed at the predetermined position in the case where the second object is processed by the laser beam. The determining device determines a processing start position of the second object based on an interval from a time to detect the first object to a time to detect the second object by the detector, a conveyance velocity of the first object, and a conveyance velocity of the second object. The laser device irradiates the second object with the laser beam by scanning the second object with the laser beam from the processing start position determined by the determining device to a processing stop position within an effective diameter of a light condenser.

A laser processing method according to an embodiment of the present disclosure includes: detecting a conveyance of a first object conveyed at a predetermined position by a detector in the case where the first object is processed by a laser beam; detecting a conveyance of a second object conveyed at the predetermined position by the detector in the case where the second object is processed by the laser beam; determining a processing start position of the second object based on an interval from a time to detect the first object to a time to detect the second object, a conveyance velocity of the first object, and a conveyance velocity of the second object; and irradiating the second object with the laser beam by scanning the second object with the laser beam from the processing start position to a processing stop position within an effective lens diameter of a light condenser. In the laser processing method according to an embodiment of the present disclosure, if a distance L1 between the first object and the second object has a variation, the variation of the distance L1 can be absorbed, and the laser processing can be performed without being affected by the variation of the distance L1. Further, when the variation of the distance L1 is absorbed, an effective lens diameter is increased by the amount of the absorption. However, in such a case, since the laser processing can be performed without being affected by the variation of the distance L1 within the effective lens diameter, the non-processing time becomes constant, and productivity can be largely increased.

Further, the distance L1 represents the shortest distance between the center of the first object and the center of the second object adjacent to each other.

In at least some embodiments, a laser processing method includes: conveying a first object and a second object; detecting the first object conveyed to a predetermined position by a detector; detecting the second object conveyed to the predetermined position by the detector following the detecting the first object; determining a processing start position of the second object from: a period of time from a time of the detecting the first object to a time of the detecting the second object; a conveyance velocity of the first object; and a conveyance velocity of the second object; and scanning and irradiating the second object with a laser beam from the processing start position to a processing stop position within an effective lens diameter of a light condenser.

In the related art using a lens as the light condenser, under various restrictions such as a focal length of the lens, an effective lens diameter, and a beam diameter, when at least the first object and the second object are conveyed in this order, and the distance L1 varies, the laser processing cannot be continuously performed while following the object being conveyed without being affected by the variation of the distance L1.

Typically, pulse laser processing is defined by mathematical expressions (1) and (2) below. A pulse energy E per pulse is a value obtained by dividing an average output P by a repetition frequency v, and a fluence F is a value obtained by dividing the pulse energy E by a beam spot area S (S is obtained based on the diameter of the pulse laser beam).

$$P = E \cdot v \qquad \text{mathematical expression (1),}$$

where P is the average output (unit: Watt, W), E is the pulse energy (unit: Joule, J), and v is the repetition frequency (unit: Hertz, Hz).

$$F = E/S \qquad \text{mathematical expression (2),}$$

where F is the fluence (J/cm$^2$), S is a beam spot area (unit: square centimeter, cm$^2$) and E is the pulse energy (J).

Parameters used in the laser processing are defined by the specifications of the laser to be used and the diameter of the beam spot at the time of the processing from the mathematical expressions (1) and (2).

A pulse width represents a time during which an object is irradiated with one pulse of the laser beam. In a pulse width of the order of nanoseconds (ns) ($1 \times 10^{-9}$ seconds (s)), the laser processing is performed by thermal deformation corresponding to an absorption spectrum of an object. In a pulse width of the order of picoseconds (ps) ($1 \times 10^{-12}$ s) or less, in addition to the thermal deformation of an object, a phenomenon referred to as multiphoton absorption occurs. In the multiphoton absorption, multiple photons having wavelengths of 1/2 to 1/3 of a wavelength of the laser beam to be used are absorbed at the same time, and the state of an electron and an atom is transited to a higher energy level. As a result, an object in a solid state is sublimated without passing through a molten state, and a processing mark can be formed on the object.

A target processing diameter d depends on an incident light beam radius $\omega_0$ and the pulse energy E of an irradiation laser beam by a mathematical expression (3) below.

$$d^2 = 2 \cdot \omega_0{}^2 \cdot \ln(F/Fth) \qquad \text{mathematical expression (3),}$$

where d is a processing diameter (cm$^2$), $\omega_0$ is an incident light beam radius (cm$^2$), F is the fluence (J/cm$^2$), and Fth is a processing threshold value (J/cm$^2$).

In a laser processing method according to an embodiment of the present disclosure, the laser processing is performed while the object being conveyed is being followed. Accordingly, the object being conveyed is irradiated with a laser beam at a processing distance.

Since an irradiation range of the laser beam (i.e., the effective lens diameter) and a lens focal length are in a trade-off relation, for example, a lens having a short focal length cannot have a wide effective lens diameter in terms of lens design.

One of the specifications for laser processing is resolution. In order to satisfy a required resolution, a processing diameter d corresponding to the resolution is required. For example, when the resolution is 600 dots per inch (dpi), the processing diameter d is 42.3 micrometers ($\mu$m). A required incident beam radius $\omega_0$ is calculated by the mathematical expression (3), and the lens focal length is determined to obtain the required processing diameter. When the lens focal length is determined, an effective lens diameter L3 is also determined.

In a laser processing method according to an embodiment of the present disclosure, a detector detects a conveyance of the first object conveyed at a predetermined position in the case where the first object is processed by a laser beam, the detector detects a conveyance of the second object conveyed at the predetermined position in the case where the second object is processed by the laser beam, a processing start position of the second object is determined based on an interval from a time to detect the first object to a time to detect the second object, a conveyance velocity of the first object, and a conveyance velocity of the second object, and the second object is irradiated with the laser beam from the processing start position of the second object to a processing stop position by scanning the second object with the laser beam within the effective diameter of the light condenser.

In the laser processing method according to an embodiment of the present disclosure, when the first object is processed from the processing start position to the processing stop position by a laser beam, it is preferable that the distance L0 (unit: millimeter, mm) from the processing start position to the processing stop position of the first object is equal to or less than the distance L1 (mm) between the first object and the second object (see an expression (i) below), and the distance L0 is less than the effective lens diameter L3 (see an expression (ii) below). In the laser processing method according to an embodiment of the present disclosure, by satisfying the expressions (i) and (ii) below, the processing start time of the second object from the processing stop time of the first object can be sufficiently obtained, and a scanning time of a scanner, position information on the object, and orientation information on the object can be appropriately corrected. As a result, the occurrence of a defective product in the processing can be prevented.

$$L0 \leq L1 \quad \text{(i)}$$

$$L0 < L3 \quad \text{(ii)}$$

The distance L0 represents the shortest distance between the center of the first object at the processing start position and the center of the first object at the processing stop position.

Preferably, a lens having a suitable focal length satisfies the effective lens diameter L3.

In an embodiment of the present disclosure, the distance L1 is an average value L1ave of distances of multiple objects, and the average value L1ave includes at least a minimum value L1min (mm) of the distance L1 and a maximum value L1max (mm) of the distance L1.

In at least some embodiments, in the laser processing method, the conveying conveys multiple objects including the first object and the second object, a distance L1 is a distance between the first object and the second object conveyed in the conveyance direction. The distance L1 includes: an average value L1ave of distances between multiple objects conveyed in the conveyance direction; a minimum value L1min of the distance L1; and a maximum value L1max of the distance L1.

In an embodiment of the present disclosure, preferably, the minimum value L1min and the distance L0 satisfy an expression (I) below.

$$L0 \leq L1min \quad \text{(I)}$$

In at least some embodiments, in the laser processing method, the minimum value L1min and a distance L0 from the processing start position to the processing stop position satisfy an expression (I) below:

$$L0 \leq L1min \quad \text{(I).}$$

When the expression (I) described above is satisfied, since the distance L1 is always equal to or larger than the distance L0, the processing start time of the second object from the processing stop time of the first object can be sufficiently obtained, a scanning time of the scanner, position information on the object, and orientation information on the object can be appropriately corrected. As a result, the occurrence of a defective product can be prevented.

In an embodiment of the present disclosure, preferably, the minimum value L1min, the distance L0, and the maximum value L1max satisfy an expression (II) below.

$$L1min \leq L0 \leq L1max \quad \text{(II)}$$

When the expression (II) described above is satisfied, a condition that the distance L1 is smaller than the distance L0 by the variation of the multiple objects occurs. In the related art, since the second object overreaches the processing start position depending on the variation, processing cannot be performed, and the productivity is decreased. However, in a laser processing method according to an embodiment of the present disclosure, a detector can measure the distance between the first object and the second object and also calculate the position of the second object at the processing stop time of the first object based on the known conveyance velocity. Thus, if the distance L1 includes the variation, the processing can be performed, and the occurrence of a defective product in the processing can be prevented.

In an embodiment of the present disclosure, when the first object is processed from the processing start position to the processing stop position by multiple laser beams, it is preferable that the distance L0 (mm) and the distance L1 (mm) satisfy the expression (III) below.

$$L0 \leq N \cdot L1 \cdot \quad \text{(III),}$$

where N represents the number of laser beams and is an integer of 2 or more.

In at least some embodiments, in the laser processing method, further includes: scanning and irradiating the first object with multiple laser beams from a processing start position to a processing stop position of the first object. A distance L0 from the processing start position to the processing stop position and a distance L1 from the first object to the second object satisfy an expression (III) below:

$$L0 \leq N \cdot L1 \quad (III),$$

where N represents a number of the multiple laser beams and an integer of two or more.

If the expression (III) described above is satisfied, in the case where multiple laser beams are used, the processing start time to the second object from a processing stop time of the first object can be sufficiently obtained, a scanning time of the scanner, position information on the object, and orientation information of the object can be appropriately corrected, and the occurrence of a defective product in the processing can be prevented.

Object

The object is not limited to any particular object and can be appropriately selected according to the purpose. Preferably, the object is a container. A container includes a container body and a cap to seal a content within the container body.

Container Body

In terms of material, shape, size, structure, and color, the container body is not limited to any particular material, shape, size, structure, and color and can be appropriately selected according to the purpose.

The material of the container body is not limited to any particular material and can be appropriately selected according to the purpose. Examples of the material of the container body include resin and glass. Among these materials, transparent resin and transparent glass are preferable, and the transparent resin is more preferable.

Examples of the resin of the container body include polyvinyl alcohol (PVA), polybutylene adipate terephthalate (PBAT), polyethylene terephthalate succinate, polyethylene (PE), polypropylene (PP), polyethylene terephthalate (PET), polyvinyl chloride (PVC), polystyrene (PS), polyurethane, epoxy, bio polybutylene succinate (PBS), butylene adipate co-terephthalate (PBAT), polyethylene-starch blend, poly(butylene succinate-co-terephthalate), polylactic acid (PLA), poly(3-hydroxybutyrate-co-3-hydroxyhexanoate) (PHBH), polyhydroxyalkanoate (PHA), Bio-PET 30, Bio-polyamide (PA) 610, 410, and 510, Bio-PA1012 and 10T, Bio-PA11T, MXD10, Bio polycarbonate, Bio polyurethane, Bio-Polyethylene, Bio-PET100, Bio-PA11, Bio-PA1010. These may be used alone or in combination thereof. Among these resins, biodegradable resins such as polyvinyl alcohol, polybutylene adipate terephthalate, and polyethylene terephthalate succinate are preferable in terms of the environmental load.

The shape of the container body is not limited to any particular shape and can be appropriately selected according to the purpose. Examples of the shape of the container body include a cylinder shape, a quadrangular prism shape, a box shape, a cone shape, a bottle shape, and a combination thereof. Among these shapes, a cylinder shape is preferable in terms of marking accuracy. The bottle-shaped container body may have an opening (i.e., finish portion or spout), a shoulder portion integrated with the opening, a sidewall portion integrated with the shoulder portion, and a bottom portion integrated with the sidewall portion.

The size of the container body is not limited to any particular size and can be appropriately selected according to the purpose.

The structure of the container body is not limited to any particular structure and can be appropriately selected according to the purpose. For example, the structure may be a single-layer structure or a multiple-layer structure.

Examples of the color of the container body include colorless and transparent, colored and transparent, and colored and opaque. Among these colors, colorless and transparent are preferable.

Cap

In terms of material, shape, size, structure, and color, the cap is not limited to any particular material, shape, size, structure, and color and can be appropriately selected according to the purpose.

The material of the cap is not limited to any particular material and can be appropriately selected according to the purpose. Examples of the material of the cap include resin, glass, metal, and ceramic. Among these materials. resin is preferably used in terms of mouldability.

As the resin of the cap, a resin similar to that of the container body of the container can be used.

The shape and size of the cap are not limited to any particular shape and size and can be appropriately selected according to the purpose as long as the opening of the container body can be sealed.

The structure of the cap is not limited to any particular shape and can be appropriately selected according to the purpose. For example, it is preferable that the cap includes a first portion that is separated from the container body when opening the seal and a second portion that remains in the container body.

Preferably, the first portion has a jagged portion on the surface as an anti-slip portion when opening the sealing. Preferably, the second portion has no jagged portion and a flat surface.

Examples of the color of the cap include colored opaque and colored transparent. Among these colors, the colored transparent is preferable in terms of readability.

Contents

Examples of the content include liquid, gas, and granular solid.

Examples of the liquid include water, tea, coffee, black tea, soft drinks, liquid detergents, and liquid cosmetics. When the content is a liquid beverage, the liquid beverage may be transparent, or have a color such as white, black, brown, and yellow.

Examples of the gas include oxygen, hydrogen, and nitrogen.

Examples of the granular solid include, pieces or granules of fruits, vegetables, nata de coco, tapioca, jelly, konjac (konnyaku, yam cake), powder detergents, and cosmetics.

Conveying Step and Conveyor

The conveying step is a step of conveying objects including the first object and the second object and at least the first object and the second object in this order, and is performed by a conveyor.

Examples of the conveyor include a belt conveyor.

The conveyance velocity of the object by the conveyor is not limited to any particular velocity and can be appropriately selected according to the purpose.

Determining Step and Determining Device

The determining step is a step to determine the processing start position of the second object based on an interval from the time to detect the first object to the time to detect the second object, a conveyance velocity of the first object, and a conveyance velocity of the second object, and is performed by the determining device. As a result, if a distance L1 has a variation, the variation of the distance L1 can be absorbed, and the occurrence of a defective product can be prevented.

Detecting Step and Detector

The detecting step is a step to detect the position of an object and is performed by a detector.

The detector detects a conveyance of the first object conveyed at a predetermined position in the case where the first object is processed by the laser beam and a conveyance of the second object conveyed at a predetermined position in the case where the second object is processed by the laser beam.

The detector includes a light projector and a light receiver.

The light projector may include a transmissive projector or a reflective projector.

The detection method is not limited to any particular detection method and can be appropriately selected according to the purpose.

As a detector, various types of detector can be used depending on transparency and the shape of the object. The detector may include a combination of detectors.

The detecting step includes a first detecting step and a second detecting step.

In the first detecting step, when the first object is processed by a laser beam, the first detecting step detects a conveyance of the first object conveyed at a predetermined position by the detector.

In the second detecting step, when the second object is processed by a laser beam, the conveyance of the second object conveyed to a predetermined position is detected by the detector.

Processing Step and Processing device

The processing step is a step to process an object with a laser beam, and is performed by a processing apparatus (e.g., a laser device).

The processing apparatus includes, for example, a laser light source, a scanner, and a light condenser.

The laser light source is a light source that emits a laser beam. The laser light source is incorporated into a laser device. The laser light source is not limited to any particular laser light source and can be appropriately selected according to the purpose. Examples of the laser light source include an excimer laser, a Nd:YAG laser, a Nd:YVO$_4$ laser, and a semiconductor laser.

The laser light source can repeatedly output a short-pulse laser beam having a constant peak intensity.

The short-pulse laser beam includes a pulse train including multiple pulses having a constant peak intensity. The short-pulse laser beam is a laser beam having a pulse width of nanoseconds (ns) ($1 \times 10^{-9}$ s) or less. The pulse width of the short-pulse laser beam is preferably in the order of femtosecond (fs) ($1 \times 10^{-15}$ s) to the order of a picosecond (ps) ($1 \times 10^{-12}$ s). The repetition frequency of the short-pulse laser beam is preferably 10 kilohertz (kHz) to 1 megahertz (MHz), and more preferably 500 kHz to 1 MHz.

Scanner

A scanner is a device to reflect the laser beam emitted from a laser light source to change its direction to a predetermined direction and to scan an object with the laser beam. Examples of the scanner include a galvano mirror, a polygon mirror, a micro-electromechanical systems (MEMS) mirror, and a rotating polygon mirror such as a polygon scanner.

Light Condenser

A light condenser condenses a laser beam. A light condenser includes, for example, a lens that keeps the scanning velocity of a laser beam by the scanner constant and converges the laser beam on at least any predetermined position of the object. Example of such a lens includes an fθ lens.

Irradiating Step

The irradiating step is a step to irradiate the second object with a laser beam by scanning the second object with the laser beam from the processing start position of the second object determined in the determining step to the processing stop position within the effective diameter of the light condenser. The effective lens diameter of the light condenser is the irradiation range of the laser beam, and is the diameter of the condenser lens through which the laser beam can pass. When the light condenser is simplified to a single lens, the diameter (i.e., = maximum diameter) of the single lens becomes the effective diameter.

Other devices

Other devices are not limited to any particular device and can be appropriately selected according to the purpose. Examples of the other device include a controller (e.g., circuitry).

The controller (e.g., circuitry) is not limited to any particular controller and can be appropriately selected according to the purpose as long as the controller the controls movement of each device. Examples of the controller include a sequencer and a computer.

A laser processing method and a laser processing apparatus according to an embodiment of the present disclosure will be described in detail with reference to the drawings. In the drawings, like reference signs denote like elements, and overlapping description may be simplified or omitted as appropriate. In addition, the number, position, and shape of the constituent members described below are not limited to those in the present embodiment, and can be set to the number, position, or shape preferable to apply the laser processing method and use the laser processing apparatus according to an embodiment of the present disclosure.

First Embodiment

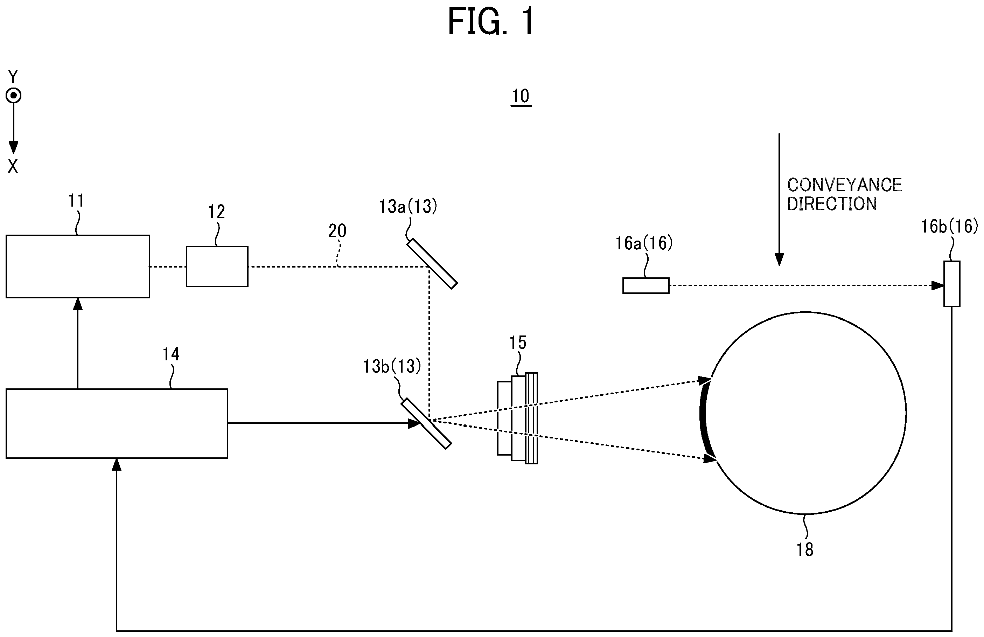

FIG. 1 is a schematic diagram of a laser processing apparatus according to a first embodiment of the present disclosure. As illustrated in FIG. 1, the laser processing apparatus 10 includes a laser device 11, a beam expander 12, a scanner 13, an irradiation controller 14, a light condenser 15, and a detector 16 as an optical system, and irradiates an object 18 with a laser beam 20.

In FIG. 1, the conveyance direction of the object 18 is defined as an X-direction, and a direction orthogonal to the conveyance direction of the object 18 and different from the propagating direction of the laser beam 20 is defined as a Y-direction. In FIG. 1, the object 18 is conveyed downstream in the conveyance direction (i.e., the X-direction) at a conveyance velocity V. In FIG. 1, the conveyance direction of the object 18 is represented by an arrow, and an optical path of a laser beam 20 to the object 18 is represented by another arrow.

The laser device 11 irradiates the object 18 with the laser beam 20 while the object is conveying.

The object 18 is not limited to any particular object and can be appropriately selected according to the purpose as long as the object 18 is irradiated with the laser beam 20. For example, the object 18 is preferably a container. When the object 18 is a container made of resin, it is preferable that the laser beam 20 changes a property of the container body of the container.

In at least some embodiments, in the laser processing method, each of the first object and the second object is a container.

The laser device 11 is a device to emit a laser beam 20. The laser device 11 emits the laser beam 20 having an output (light intensity) suitable for changing a property of at least a surface or an inside of a base material of the object 18 irradiated with the laser beam 20.

The type of the laser beam 20 is not limited to any particular type, but a pulse laser beam is preferable in terms of intensity.

The laser device 11 can perform an on-off control of emission, an emission frequency control, and a light intensity control of the laser beam 20. For example, the laser device 11 emits a laser beam 20 having a wavelength of 355 nm, a pulse width of 10 ps, and an average output of 30 to 50 W.

The diameter of the laser beam 20 is preferably 1 $\mu$m to 200 $\mu$m to change the property of a region of the base material of the object 18.

In FIG. 1, only one laser device 11 is used, but multiple laser devices 11 may be used. When multiple laser devices 11 are used, the on-off control, the emission frequency control, or the light intensity control may be performed independently for each laser device 11.

The beam expander 12 expands the laser beam. The diameter of a laser beam 20 of a parallel beam emitted from the laser device 11 is expanded by the beam expander 12 and enters the scanner 13.

The scanner 13 scans the object with the laser beam 20. The scanner 13 includes a mirror 13a and a mirror 13b. The mirrors 13a and the mirror 13b have a function to change a reflection angle by a driver such as a motor.

The mirror 13a is a scanning mirror that scans the mirror 13b with the laser beam 20 incident on the mirror 13a by changing the reflection angle parallel to the X-direction. Examples of the mirror 13a include a galvano mirror, a polygon mirror, and a micro-electromechanical system (MEMS) mirror.

In an embodiment of the present disclosure, the mirror 13a and the mirror 13b deflect the laser beam 20 as one-dimensional scanning in the X-direction, but the scanning direction is not limited thereto. For example, the mirror 13a and the mirror 13b may use scanning mirrors that change the reflection angles in two directions orthogonal to each other to perform two-dimensional scanning of the laser beam 20 in the X- and Y-directions.

The mirror 13a and the mirror 13b scan the object 18 with the laser beam 20, and at least one of the surface or the inside of the base material of the object is irradiated with the laser beam 20.

The irradiation controller 14 outputs a signal to control the laser output to the laser device 11 and outputs a signal to scan the object with the laser beam 20 to the mirror 13b.

The irradiation controller 14 is connected to the light receiver 16b that is a part of the detector 16, and can control the light receiver 16b to perform arithmetic and storage processing.

The light condenser 15 condenses the laser beam. The light condenser 15 is a lens that keeps the scanning velocity of the laser beam 20 deflected by the mirror 13a and the mirror 13b constant and converges the laser beam 20 on at least one of the predetermined position on the surface or the inside of the base material of the object 18. Examples of the light condenser 15 include an f$\theta$ lens and an arc sine lens that keep the scanning velocity constant. The light condenser 15 may include a combination of multiple lenses.

Preferably, the light condenser 15 is arranged so that the beam spot diameter of the laser beam 20 is minimized in a region of the object 18 in which the property of the base material is changed.

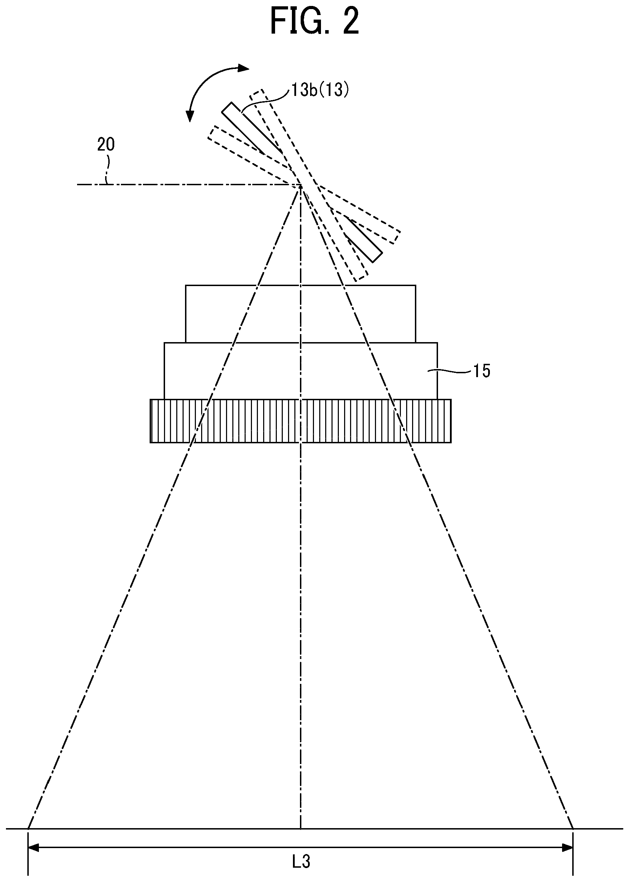

FIG. 2 is a schematic diagram of the light condenser 15 in a laser processing apparatus 10 according to an embodiment of the present disclosure. With respect to the relation between the effective lens diameter L3 and the scanning of the laser beam 20, the object 18 is processed by the laser beam 20 within an effective lens diameter L3 of the light condenser 15. In other words, the object 18 is irradiated with the laser beam 20 by scanning the object 18 with the laser beam 20 by the mirror 13b within a range of a chained line indicating the effective lens diameter L3 of the light condenser 15, and the object 18 is processed by the laser beam 20.

In order to obtain the energy required for laser processing, a smaller diameter of the laser beam 20 is used because the smaller diameter of the laser beam 20 converges more energy. As a result, laser processing can be facilitated. By contrast, the laser processing becomes difficult if a larger diameter of the laser beam 20 is used. Since the beam diameter varies with a lens focal length, when a longer focal length of a lens is used, an effective lens diameter becomes larger. By contrast, when a shorter focal length of a lens is used, an effective lens diameter becomes smaller. Thus, since the effective lens diameter and the lens focal length are in a trade-off relation, a lens is designed in consideration of a balance between the focal length and the effective lens diameter.

As illustrated in FIG. 1, the detector 16 detects the position of the object 18. The detector 16 includes a light projector 16a and a light receiver 16b. The light projector 16a and the light receiver 16b detect the position of the object 18 at a point upstream from the laser device 11 in the conveyance direction.

The detector 16 may include a transmissive detector and a reflective detector. The detection method of the detector 16 is not limited to any particular detection method. When the detector 16 is a reflective detector, projects, the light projector 16a projects a light beam to the object 18 in the detector 16. The detector 16 detects a position of the object 18 based on a position by the light receiver 16b and a period of time until the light is received. When the detector is 16 a transmissive detector, the projector 16a projects a light beam to the object 18 in the detector 16 and detects a position of the object so that the light receiver 16b receives the light beam transmitted through the object 18.

Since the installation positions of various sensors and the conveyance position and the conveyance velocity V of the object 18 are known parameters, the timing of the irradiation of the laser beam 20 can be determined based on these known parameters.

In at least some embodiments, in a laser processing apparatus includes: a conveyor to convey at least a first object or a second object in this order; a laser device including: a laser light source to emit a laser beam; and a light condenser to condense the laser beam emitted from the laser light source to irradiate and process the first object and the second object with the laser beam; a detector to: detect the first object conveyed to a predetermined position; detect the second object conveyed to the predetermined position; and circuitry configured to determine a processing start position of the second object from: a period of time from a time the detector detecting the first object to a time the detector detecting the second object; a conveyance velocity of the first object by the conveyor; and a conveyance velocity of the second object by the conveyor. The laser device scans and irradiates the second object with the laser beam from the processing start position to the processing stop position within an effective lens diameter of the light condenser.

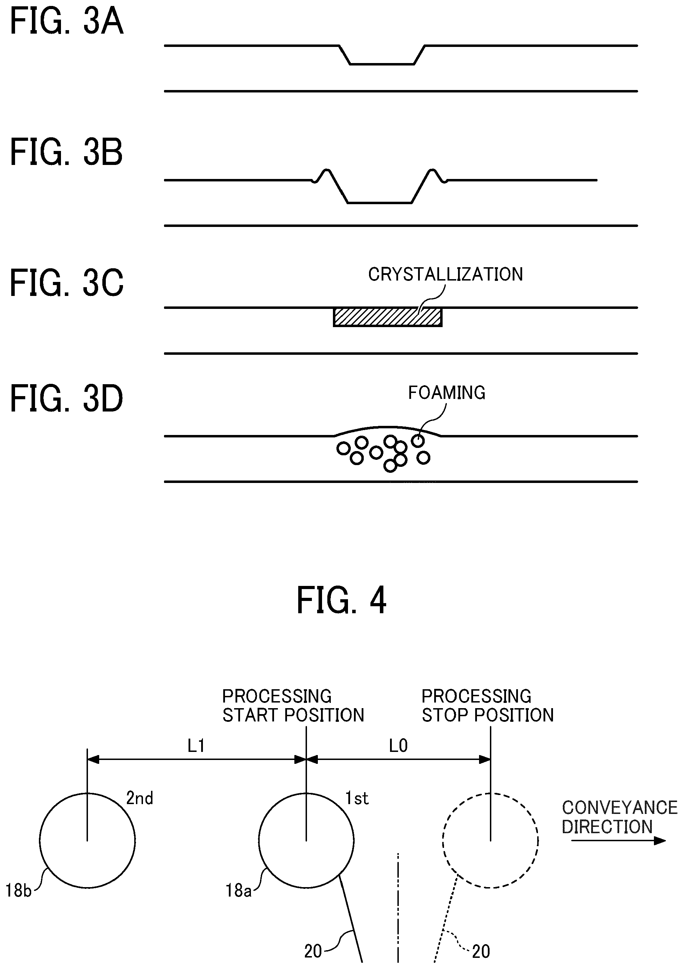

In the case where the object 18 is a container body, a property change of the object 18 caused by the laser processing according to an embodiment of the present disclosure will be described below. FIGS. 3A to 3D are schematic diagrams each illustrating the property changes of the container body of the object 18 according to an embodiment of the present disclosure. As illustrated in FIG. 3A, a portion of the surface of the container body of the object 18 is irradiated with the laser beam 20 to vaporize the portion of the surface of the container body, and a concave is formed on the surface of the container body. As illustrated in FIG. 3B, a portion of the surface of the container body of the object 18 is irradiated with the laser beam 20 to vaporize the portion of the surface of the container body, and a concave is formed on the surface of the container body. The concave has protrusions at the periphery. By contrast, the concave in FIG. 3A does not have a protrusion. As illustrated in FIG. 3C, a portion of the surface of the container body of the object 18 is irradiated with the laser beam 20 to crystalize the portion of the surface of the container body. The portion of the surface of the container body is changed into a crystalline portion. As illustrated in FIG. 3D, a portion of the surface of the container body of the object 18 is irradiated with the laser beam 20 to foam the portion of the surface of the container body. The portion of the surface of the container body is changed into a foam portion. As illustrated in FIGS. 3A to 3D, a portion of the surface of the container body of the object is irradiated with the laser beam 20, and the property of the container body can be changed.

As described above, the property of the surface or the inside of the container body of the object can be changed by changing a shape portion of the surface of the container body, crystallizing a surface portion of the container body, or forming a foaming portion inside the container body.

As illustrated in FIGS. 3A and 3B, a method to form a concave by vaporizing a portion of the surface of the container body of the object is, for example, a method to irradiate the portion of the surface with a pulse laser beam having a wavelength of 355 nanometers (nm) to 1064 nm and a pulse width of 10 fs to 500 ns. As a result, the portion of the surface of the container body irradiated with the laser beam is vaporized, and a minute concave is formed in the portion on the surface of the container body.

Further, a concave can be formed by irradiating a portion of the surface of the container body with a continuous wave (CW) laser beam having a wavelength range of 355 nm to 1064 nm and melting the portion of the surface of the container body. Further, as illustrated in FIG. 3D, a portion of the inside and the surface of the container body can be foamed and made opaque by continuously irradiating the portion with a laser beam even after melting the portion of the surface of the container body.

As illustrated in FIG. 3C, when a portion of the surface of the container body is changed to a crystallized state, and the container body is made of, for example, polyethylene terephthalate (PET) resin, a method can be used. In the method, the temperature of the container body is rapidly increased by irradiating the portion of the surface with a CW laser beam having a wavelength range of 355 nm to 1064 nm, and then the container body is gradually cooled by decreasing the laser power. As a result, a portion of the surface of the container body made of PET resin can be changed to a crystallized state, and the portion becomes opaque. By contrast, when the temperature is raised and then rapidly cooled by turning off the laser beam, the PET becomes amorphous and transparent.

The property change of the container body of the object is not limited to those illustrated in FIGS. 3A to 3D. The property of the container body of the object made of resin may be changed by yellowing, oxidation, or surface modification.

In addition, a heating control can be used to form a concave or a convex on the container body. In the heating control, the container body is coated with an absorber (i.e., a conversion material) before the container body is irradiated with the laser beam 20. The absorber absorbs the laser beam 20 and converts the light energy of the laser beam 20 into thermal energy. By using the thermal energy, a concave or a convex on the container body can be formed. By forming the concave or the convex in the container body, characters, symbols, figures, and combinations thereof can be expressed.

A laser processing method to process the object 18 using a laser processing apparatus illustrated in FIG. 1 according to the first embodiment of the present disclosure will be described. FIG. 4 is a schematic diagram illustrating the processing start position of a first object in the laser processing method according to the first embodiment of the present disclosure. In FIG. 4, among the objects 18 illustrated in FIG. 1, the first object is referred to as a first object 18a, the second object is referred to as a second object 18b, and the first object 18a and the second object 18b are collectively referred to as the object 18.

In the first embodiment, when laser processing is performed from the processing start position to the processing stop position of the first object 18a, the distance L0 (mm) from the processing start position to the processing stop position and the distance L1 (mm) between the first object 18a and the second object 18b satisfy the mathematical expression (I) below.

$$L0 \leq L1 \quad (i)$$

According to the laser processing method of the first embodiment, the processing start time to the second object 18b can be sufficiently obtained from the processing stop time of the first object 18a. Since the scanning time of the scanner, position information of the object 18, and orientation information on the object 18 can be appropriately corrected, the occurrence of a defective product can be prevented.

In FIG. 4, the first object 18a and the second object 18b are conveyed in this order in a conveyance direction (depicted by an arrow in FIG. 4). In FIGS. 4, a solid line indicates the processing start position of the first object 18a, and a dashed line indicates the processing stop position of the first object 18a. The two-dot chain line indicates the center of the lens (the same applies to other drawings in the following description). The distance L0 indicates the distance from the processing start position to the processing stop position of the first object 18a, and the distance L1 indicates a distance between the first object 18a and the second object 18b.

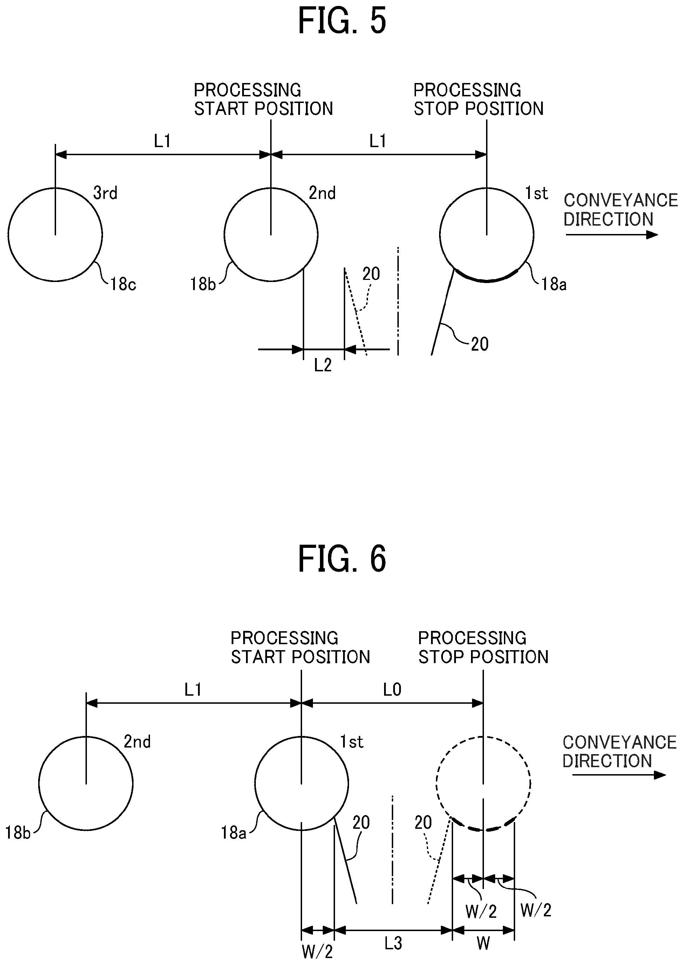

FIG. 5 is a schematic diagram illustrating the first object while the processing is stopped according to an embodiment of the disclosure. As illustrated in FIG. 5, the third object 18c is conveyed in the conveyance direction following the first object 18a and the second object 18b. The distance L1 between the first object 18a and the second object 18b is equal to the distance L1 between the second object 18b and the third object 18c. In FIG. 5, when the first object 18a is stopped being processed, the second object 18b is located downstream from the processing start position of the first object 18a. Since the positional relation described above is maintained, an interval to process the second object 18b to be processed by the laser beam after the first object 18a has been processed by the laser beam is calculated by dividing a standby distance L2 (m) of the object by a conveyance velocity V (m/s) (i.e., L2/V (s)).

Further, when the time for a galvano mirror to jump to the processing start position from the processing stop position is t1 (s), and a computation time of the processing data adjusted to the detected position of the object 18 and the orientation of the object 18 after the position of the object 18 and the orientation of the object 18 are detected is t2 (s), the maximum of the processing time is t1 · L2 (s) and t2 · L2 (s).

The distance L1 between the first object 18a and the second object 18b varies depending on the accuracy of the arrangement of the object on the conveyor. When the distance L0 is larger than the distance L1 (i.e., L0 > L1), the standby distance L2 is less than 0 (i.e., the standby distance L2 < 0). Since the laser processing apparatus 10 includes the detector 16, the standby distance L2 (m) can be calculated based on the time t3 (s) that is a difference between the time when the first object 18a passes through the detector 16 and the time when the second object 18b passes through the detector 16 and the conveyance velocity V (m/s). In other words, the standby distance L2 (m) is obtained by multiplying the conveyance velocity V (m/s) by the time t3 (s), and the standby time t2 (s) is obtained by dividing the obtained standby distance L2 (m) by the conveyance velocity V (m/s).

When the standby distance L2 is less than 0 (i.e., the standby distance L2 < 0), the laser processing is not performed on the object 18, and the object 18 is conveyed to the downstream as it is. The object 18 is determined as a rejected product by an inspection apparatus disposed downstream so as not to be shipped.

FIG. 6 is a schematic diagram illustrating a condition about a distance L0 from a processing start position to a processing stop position in the laser processing method according to the first embodiment of the present disclosure. As illustrated in FIG. 6, the maximum distance L0max of the distance L0 is expressed by an expression of L3 + W (= L3 + 1/2 · W + 1/2 · W), where L3 is an effective lens diameter and W is a processing width. Since the processing width W is the effective lens diameter L3, the maximum distance L0max is twice the effective lens diameter L3 (i.e., 2 × L3). For example, in an f920 lens, since the effective lens diameter L3 is 470 mm, the maximum distance L0max is 940 mm (= 470 mm × 2). On the other hand, in the case where the minimum distance L0min of the distance L0 is 0 mm, the minimum distance L0min is 0 mm because the object is not subjected to the follow-up processing.

Second Embodiment

When a second object is processed by laser processing, a laser processing method according to a second embodiment includes, detecting the second object by a detector, determining a processing start position of the second object based on an interval from a time to detect the first object to the time to detect the second object, a conveyance velocity of the first object, and a conveyance velocity of the second object, and irradiating the second object with a laser beam by scanning the second object by the laser beam from the processing start position to a processing stop position within an effective lens diameter of a light condenser. Further, the laser processing method includes other steps depending on requirements.

According to the laser processing method according to the second embodiment of the present disclosure, when the distance L1 varies, the variation in the distance L1 can be absorbed, and laser processing can be performed without being affected by the variation in the distance L1. As a result, the occurrence of a defective product can be prevented. Further, when the variation of the distance L1 is absorbed, an effective lens diameter is increased by the amount of the absorption. However, in such a case, since the laser processing can be performed without being affected by the variation of the distance L1 within the effective lens diameter, the non-processing time becomes constant, and productivity can be largely increased.

The second embodiment of the present disclosure will be described in detail below with reference to the drawings. In the second embodiment of the present disclosure, the same or like reference signs with the first embodiment described above denote like configurations, and redundant description is appropriately simplified or omitted.

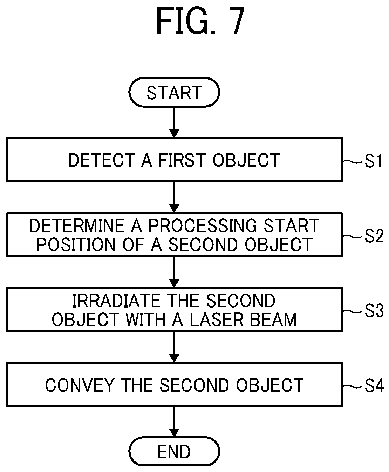

FIG. 7 is a flowchart of laser processing in the laser processing method according to the second embodiment of the present disclosure. The flow of the laser processing method according to the second embodiment executed by the irradiation controller 14 in FIG. 1 will be described below with reference to FIG. 7. The flow of the processing in FIG. 7 is repeatedly executed while the first object 18a and the second object 18b are sequentially conveyed, and some steps are executed in parallel.

In the following description, the second object 18b is described. As an assumption, the first object 18a is detected in step S1, a processing start position is determined based on the detected position and a conveyance velocity of the first object 18a in step S2, irradiating processing is performed in step S3, and conveying processing is performed in step S4. Following this processing step of the first object 18a, the process returns to step S1 to start the detection of the second object 18b.

In step S1, when the detector 16 of the laser processing apparatus 10 detects the second object 18b, the process proceeds to step S2.

In step S2, the processing start position of the second object 18b is determined based on an interval from the time to detect the first object 18a to the time to detect the second object 18b in the process of the preceding flow and the conveyance velocities of the first object 18a and the second object 18b, and then the process proceeds to step S3.

In step S3, the scanner scans the second object 18b with the laser beam 20 from the processing start position to the processing stop position to irradiate the second object 18b with the laser beam within the effective lens diameter of the light condenser in the laser processing apparatus 10, and then the process proceeds to step S4.

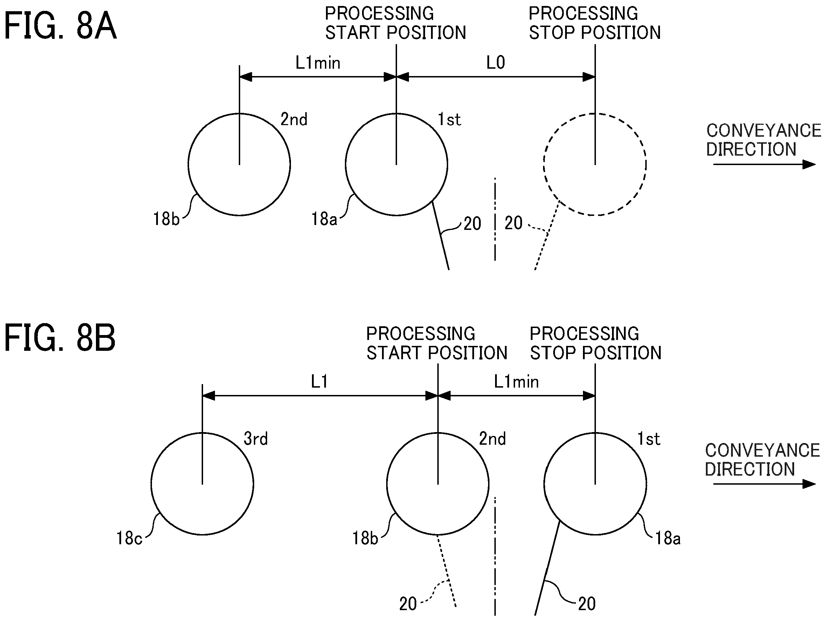

In step S4, the conveyor of the laser processing apparatus 10 conveys the second object 18b to a predetermined position. If there is a third object 18c (see FIG. 8) following the second object 18b, the process returns to step S1 again to perform the process. If there is no third object 18c after the second object 18b, the present process is finished.

The flowchart illustrated in FIG. 7 is preferably executed as follows. The detecting step of step S1 in FIG. 7 includes a first detecting step of detecting that the first object 18a has been conveyed to a predetermined position by the detector in the case where the first object 18a is processed by the laser beam, and a second detecting step of detecting that the second object 18b has been conveyed to the predetermined position by the detector in the case where the second object 18b is processed by the laser beam. The detecting step of step S2 in FIG. 7 determines a processing start position based on an interval from the time to detect the first object 18a in the first detecting step to the time to detect the second object 18b in the second detecting step, and the conveyance velocity of the first object 18a, and a conveyance velocity of the second object 18b. The irradiating step of step S3 in FIG. 7 is a step to irradiate the second object 18b with the laser beam by scanning the second object 18b with the laser beam to the processing start position of the second object 18b determined in the determining step to the processing stop position within the effective diameter of the light condenser.

In the laser processing method according to the second embodiment, the distance L1 between the first object 18a and the second object 18b is an average value L1ave (m) of the distances of multiple objects 18, and the average value L1ave is an average value including at least a minimum value L1min (mm) of the distance L1 and a maximum value L1max (mm) of the distance L1.

The minimum value L1min, the distance L0, and the maximum value L1max preferably satisfy the mathematical expression (II) below.

$$L1min \leq L0 \leq L1max \quad (II)$$

In at least some embodiments, in the laser processing method, a distance L0 from the processing start position to the processing stop position, the minimum value L1min, and the maximum value L1max satisfy an expression (II) below:

$$L1min \leq L0 \leq L1max \quad (II).$$

As a result, a condition that the distance L1 is smaller than the distance L0 by the variation of the multiple objects 18 occurs. In the related art, since the second object 18b overreaches the processing start position depending on the variation, processing cannot be performed, and the productivity is decreased. However, in the laser processing method according to the second embodiment of the present disclosure, the detector can measure the distance between the first object 18a and the second object 18b and calculate the position of the second object 18b at the processing end of the first object from the known conveyance velocity. Thus, the laser processing method according to the second embodiment can perform processing when the distance L1 includes the variation, and the occurrence of defective products can be prevented.

FIGS. 8A and 8B are schematic diagrams of laser processing in the laser processing method according to a second embodiment of the present disclosure. In FIGS. 8A and 8B, a first object 18a and a second object 18b are conveyed in this order in a conveyance direction (depicted by an arrow in the drawings). In FIGS. 8A and 8B, a solid line indicates the processing start position of the first object 18a, a dashed line indicates the processing stop position of the first object 18a, and a two-dot chain line indicates a lens center (the same applies to other drawings in the following description).

In FIG. 8A, a minimum value L1min indicates a minimum value of a distance between the first object 18a and the second object 18b, and the minimum value L1min is equal to or less than a distance L0.

FIG. 8B is a schematic diagram illustrating a third object 18c to be conveyed in a conveyance direction following a first object and a second object 18b. The minimum value L1min is the minimum value of the distance between the first object 18a and the second object 18b, and a distance L1 indicates the distance between the second object 18b and the third object 18c. When the first object 18a is stopped being processed, the second object 18b is located downstream from the processing start position of the first object 18a (see FIG. 8B).

A conveyance velocity V (m/s) of the conveyor is constant. The processing start position of the second object 18b can be specified by monitoring the time of detection of the second object 18b, after the detection of the position of the first object 18a by the detector 16. In other words, the processing start position of the second object 18b can be determined according to the detection of the first object 18a and the detection of the second object 18b to be processed subsequently by the laser beam 20, and the laser irradiation in the processing can be controlled.

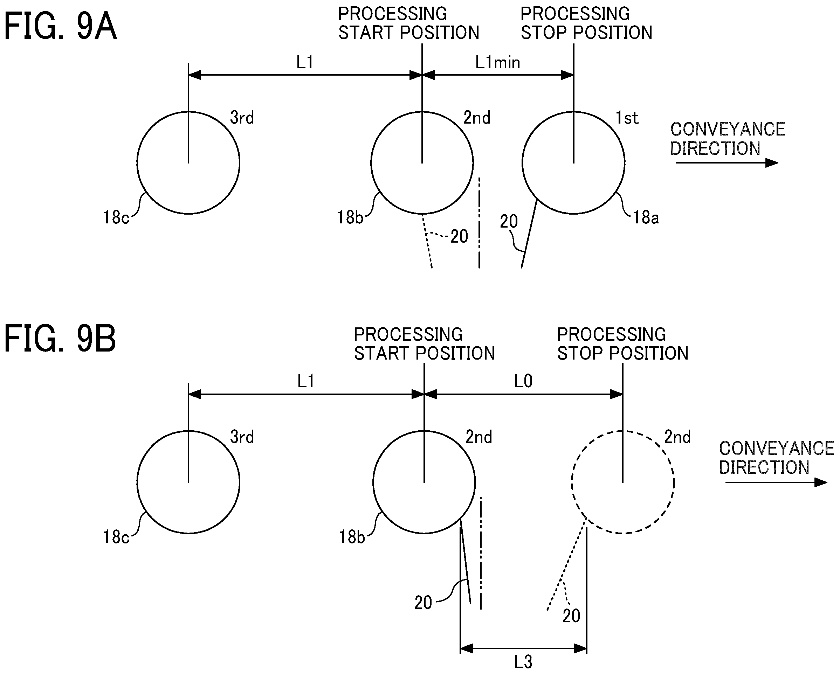

FIGS. 9A to 11B are schematic diagrams each illustrating other laser processing in the laser processing method according to the second embodiment of the present disclosure. As illustrated in FIGS. 9A and 9B, the second object 18b is specified and irradiated with the laser beam 20 by scanning the second object 18b with the laser beam from a processing start position to a processing stop position to process the second object 18b by the laser beam 20. As a result, the effective lens diameter L3 increases by the amount of absorption of the variation in the distance L1, but laser processing can be performed within the effective lens diameter L3 without being affected by the variation of the distance L1.

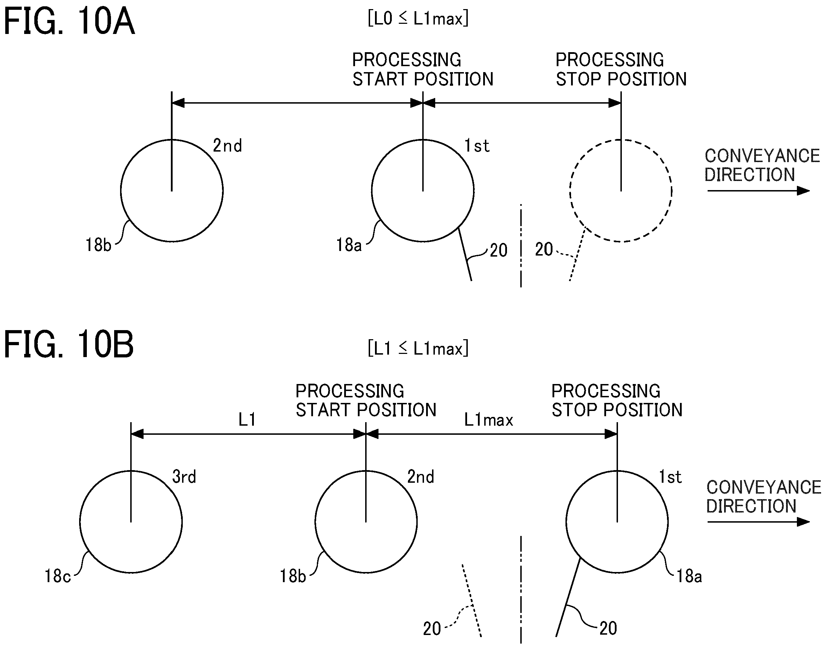

As illustrated in FIGS. 10A and 10B, the first object 18a and the second object 18b are conveyed in the conveyance direction depicted by an arrow in FIGA. 10A and 10B. In FIG. 10A, the maximum value L1max indicates the maximum value of the distance between the first object 18a and the second object 18b, and the maximum value L1max is equal to or larger than the distance L0 (L0 $\leq$ L1max).

FIG. 10B is a schematic diagram illustrating a third object 18c to be conveyed in the conveyance direction following the first object 18a and the second object 18b. The maximum value L1max is the maximum value of the distance between the first object 18a and the second object 18b, and the distance L1 is the distance between the second object 18b and the third object 18c.

When the first object 18a is stopped being processed, the second object 18b is located downstream from the processing start position of the first object 18a (see FIG. 10B).

Since the conveying velocity V (m/s) of the conveyor is constant, the processing start position of the second object 18b can be specified by monitoring the detection time of the second object 18b after detection of the first object 18a by the detector 16.

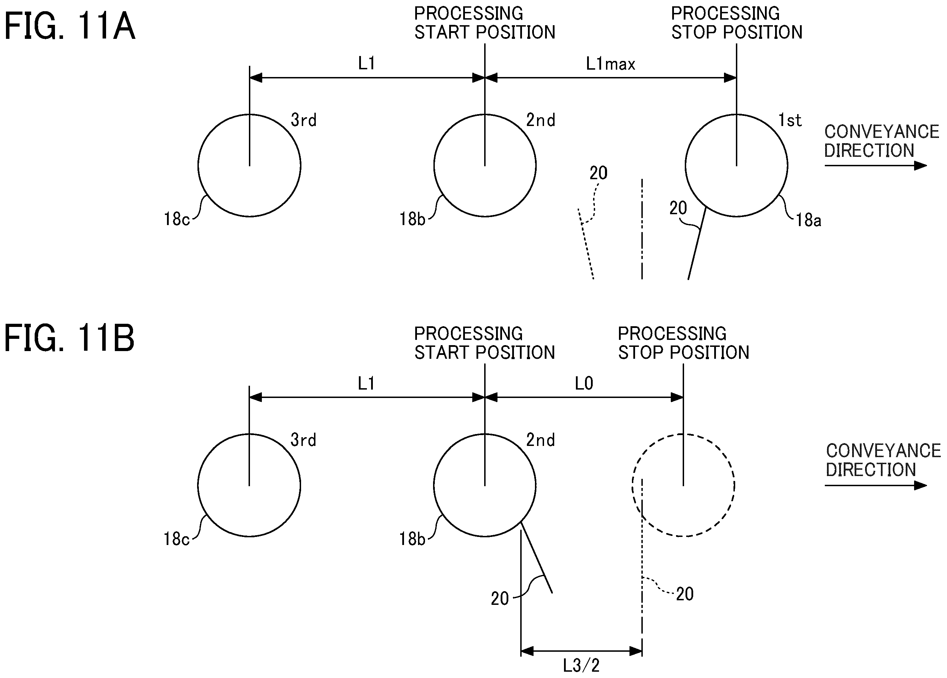

As illustrated in FIGS. 11A and 11B, the second object 18b is specified and irradiated with the laser beam 20 by scanning the second object 18b with the laser beam from the processing start position to the processing stop position to process the second object 18b with the laser beam 20. As a result, the effective lens diameter L3 increases by the amount of absorption of the variation in the distance L1, but laser processing can be performed within the effective lens diameter L3 without being affected by the variation of the distance L1.

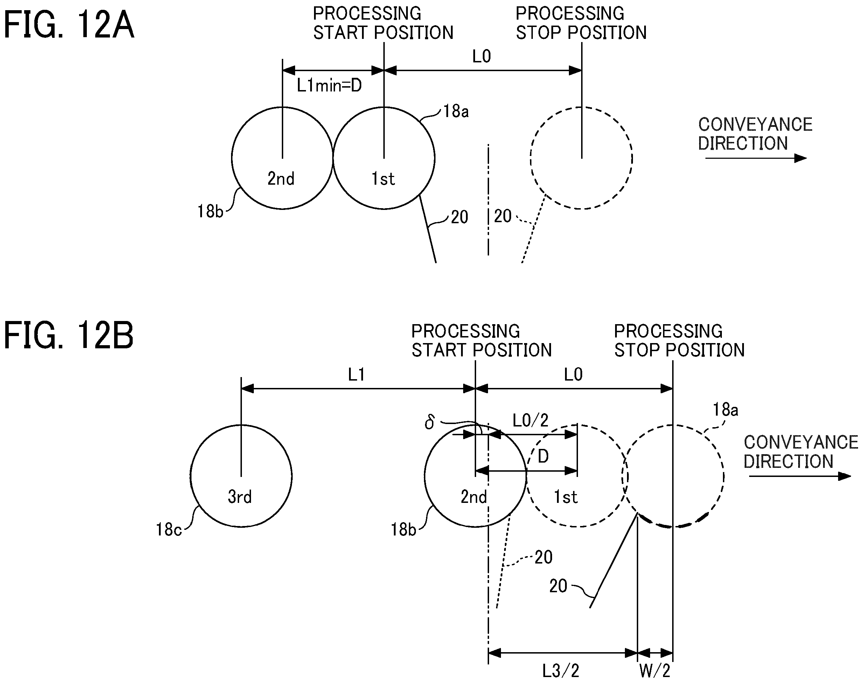

FIGS. 12A and 12B are schematic diagrams each illustrating the relation between the effective lens diameter L3 and the minimum value L1 in the laser processing method according to a second embodiment of the present disclosure. In FIGS. 12A and 12B, the relation between the effective lens diameter L3 and the minimum value L1min is illustrated. As illustrated in FIG. 12A, the minimum value L1min is the diameter D of the object that is the shortest distance between the first object 18a and the second object 18b adjacent to each other. At this time, as illustrated in FIG. 12B, the distance L0 required for the laser processing of the second object 18b adjacent to the first object 18a is expressed by a mathematical expression (4) below. The $\delta$ in the mathematical expression (4) is obtained from the mathematical expression (5) below.

$$L0 = \delta + L3/2 + W/2 \qquad \text{mathematical expression (4)}$$

$$\delta = D - L0/2 \qquad \text{mathematical expression (5)}$$

The two-dot chain line in FIG. 12B represents the center of the lens. In FIG. 12B, the first object 18a is located at the processing stop position. The minimum value L1min indicates that the first object 18a and the second object 18b are in contact with each other. The distance between the center of the second object 18b and the center of the lens in this configuration is $\delta$.

From the mathematical expressions (4) and (5), a mathematical expression (4)' is derived.

$$L0 = D - L0/2 + L3/2 + W/2 \qquad \text{mathematical expression (4)}'$$

The effective lens diameter L3 is expressed by a mathematical expression (6) below.

$$L3 = 3 \cdot L0 - 2 \cdot \cdot D - W \cdot \text{mathematical expression (6)}$$

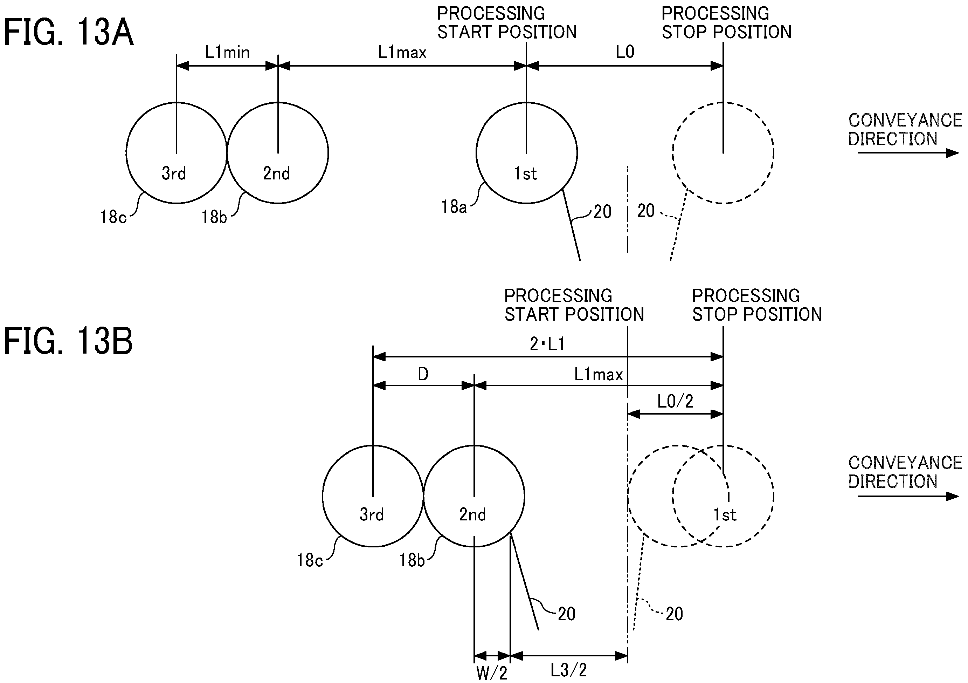

FIGS. 13A and 13B are schematic diagrams each illustrating the relation between the effective lens diameter L3 and the maximum value L1max in the laser processing method according to the second embodiment of the present disclosure. In FIGS. 13A and 13B, the relation between the effective lens diameter L3 and the maximum value L1max of the distance L1 between the first object 18a and the second object 18b is illustrated. The maximum value L1max is the maximum distance between the second object 18b and the first object 18a while the third object 18c and the second object 18b are adjacent to each other.

As illustrated in FIG. 13B, the maximum value L1max becomes maximum in the state where the second object 18b is in contact with the third object 18c, and is expressed by a mathematical expression (7) below. At the maximum value L1max, the second object 18b and the third object 18c are in contact with each other. The distance between the first object 18a and the third object 18c is twice of the distance L1 and is expressed by a mathematical expression (8) below.

$$L1max = W/2 + L3/2 + L0/2 \qquad \text{mathematical expression (7)}$$

$$2 \cdot L1 = D + L1max \qquad \text{mathematical expression (8)}$$

In the case of the configuration illustrated in FIG. 13B, the effective lens diameter L3 has a diameter that enables the second object 18b to be processed. When the maximum value L1max is eliminated from the mathematical expression (8) described above, a mathematical expression (9) below is derived.

$$L3 = 4 \cdot L1 - L0 - 2 \cdot D - W \qquad \text{mathematical expression (9)}$$

Since the maximum processing width Wmax is equal to a diameter D of the object, the effective lens diameter L3 can be expressed by a mathematical expression (10) below.

$$L3 = 4 \cdot L1 - L0 - 3 \cdot D \cdot \text{mathematical expression (10)}$$

In FIGS. 13A and 13B, since the distance L1 is larger than the distance L0 (i.e., the distance L1> the distance L0), the effective lens diameter L3 required for the processing satisfies the mathematical expression (10) described above.

For example, when the effective lens diameter L3 of the f920 lens is 470 mm, the distance L1 is 150 mm, and the diameter D of the object is 20 mm, the distance L0 is 70 mm. The f920 lens is a lens having a large beam diameter as a processing lens. Thus, in the case where a higher definition laser processing is required, preferably, a lens having a shorter focal length such as an f100 lens is used. However, since the effective lens diameter L3 becomes smaller in the case where a lens having a shorter focal length is used, preferable laser processing can be performed by changing the distance L1 and the distance L0 as long as the mathematical expression (10) described above is satisfied.

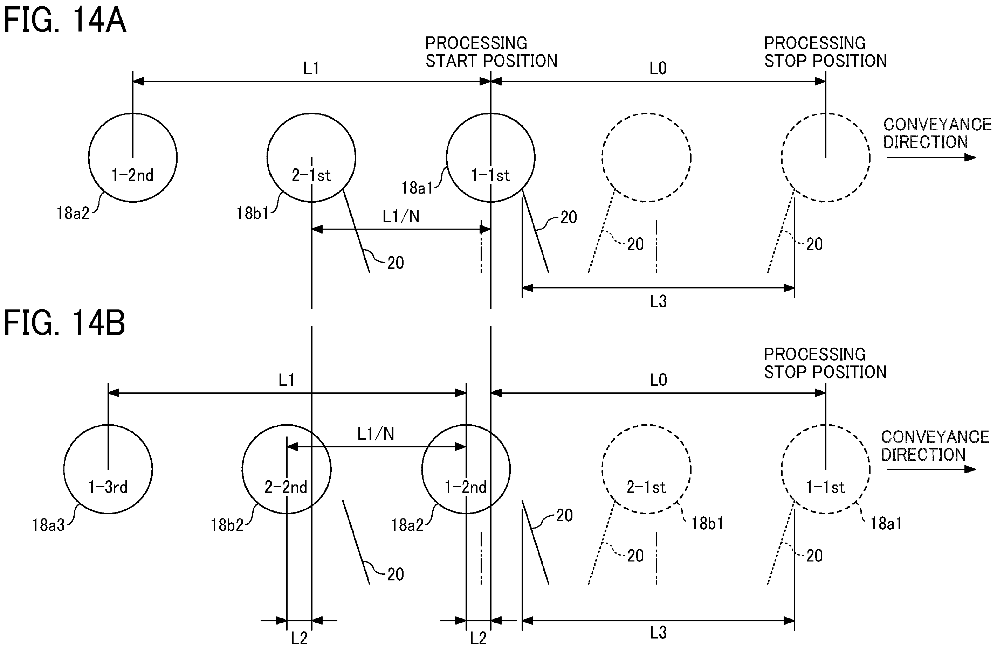

FIGS. 14A and 14B are diagrams each illustrating an arrangement of the object in the case where multiple laser devices are disposed in the conveyance direction in the laser processing method according to the second embodiment of the present disclosure. In FIG. 14A, when multiple laser devices 11 are disposed in the conveyance direction and the objects are processed by the laser devices, a processing start position of a first object 18a1 (1 - 1st) to be processed by a (first) laser device 11 with a laser beam and a processing start position of a second object 18b1 (2 - 1st) to be processed by a (second) laser device 11 with a laser beam are illustrated.

The first object 18a1 (1 - 1st) and the second object 18b1 (2 - 1st) in FIG. 14B are moved by the distance L0 from the first object 18a1 (1 - 1st) and the second object 18b1 (2 - 1st) in FIG. 14A. In FIG. 14B, a processing start position of a first object 18a2 (1 - 2nd) to be processed by the (first) laser device 11 with a laser beam and a processing start position of a second object 18b2 (2 - 2nd) to be processed by the (second) laser device 11 are illustrated.

As illustrated in FIGS. 14A and 14B, when the multiple laser devices are disposed in the conveyance direction, the first object 18a1 (1 - 1st) to be processed by the (first) laser device 11 with a laser beam 20 and the second object 18b1 (2 - 1st) to be processed by the (second) laser device 11 with a laser beam 20 are conveyed at positions separated by the standby distance L2 with respect to each the laser beam 20 at the processing start position.

Further, the first object 18a2 (1 - 2nd) to be processed by the (first) laser device 11 with a laser beam 20 and the second object 18b2 (2 - 2nd) to be processed by the (second) laser device 11 with a laser beam are conveyed at positions separated by a standby position L2 with respect to each laser beam 20 at the processing start position.

At this time, assuming that the number of the laser devices 11 is N (where N is an integer of 2 or more) and the distance L0 is the distance over which the same laser device 11 processes the object, as illustrated in FIG. 14A, the first object 18a1 (1 - 1st) to be processed by the (first) laser device 11 with a laser beam and the second object 18b1 (2 - 1st) to be processed by the (second) laser device 11 with a laser beam are disposed at positions separated by L1/N. As illustrated in FIG. 14B, the first object 18a2 (1 - 2nd) to be processed by the (first) laser device 11 with a laser beam and the second object 18b2 (2 - 2nd) to be processed by the (second) laser device 11 with a laser beam are also disposed at positions separated by L1/N.

Thus, when the number of the multiple laser devices 11 is N (where N is an integer of 2 or more), and the distance of the laser processing by the identical laser device 11 is the distance L0, the laser processing method according to an embodiment of the present disclosure satisfies the distance of L0/N, and the expression (6) or expression (7) described above. As a result, the first object 18a to be processed by the (first) laser device 11 with a laser beam and the second object 18b to be processed by the (second) laser device 11 with a laser beam are conveyed at positions separated from each other by the standby distance L2 with respect to each laser beam 20 at the laser processing start position. Accordingly, in the laser processing method according to an embodiment of the present disclosure, multiple objects 18 can be processed using the multiple laser devices 11. At this time, a required effective lens diameter L3 can be minimized by assigning an interval between the optical axes of the laser beams of each laser device 11 to a distance L1.

Third Embodiment

A laser processing method according to a third embodiment is a laser processing method to process multiple objects with multiple laser beams by conveying at least a first object and a second object in this order. When the first object is processed from a processing start position to a processing stop position with the multiple laser beams, a distance L0 (mm) from the processing start position to the processing stop position and a distance L1 (mm) between the first object and the second object satisfy an expression (III) below.

$$L0 \leq N \cdot L1 \quad \text{(III)},$$

where N represents the number of laser beams and is an integer of 2 or more.

In the laser processing method according to an embodiment of the present disclosure, when multiple objects including the first object and the second objects are processed by multiple laser beams 20, the processing start time of multiple second objects 18b can be sufficiently obtained from the processing stop time of multiple first objects 18a. Since the scanning time of the scanner, the position information on the multiple objects 18, and the orientation information on the multiple objects 18 can be appropriately corrected, the occurrence of a defective product can be prevented.

The third embodiment of the present disclosure will be described in detail below with reference to the drawings. In the third embodiment of the present disclosure, the same or like reference signs with the first embodiment and the second embodiment described above denote like configurations, and redundant description is appropriately simplified or omitted.

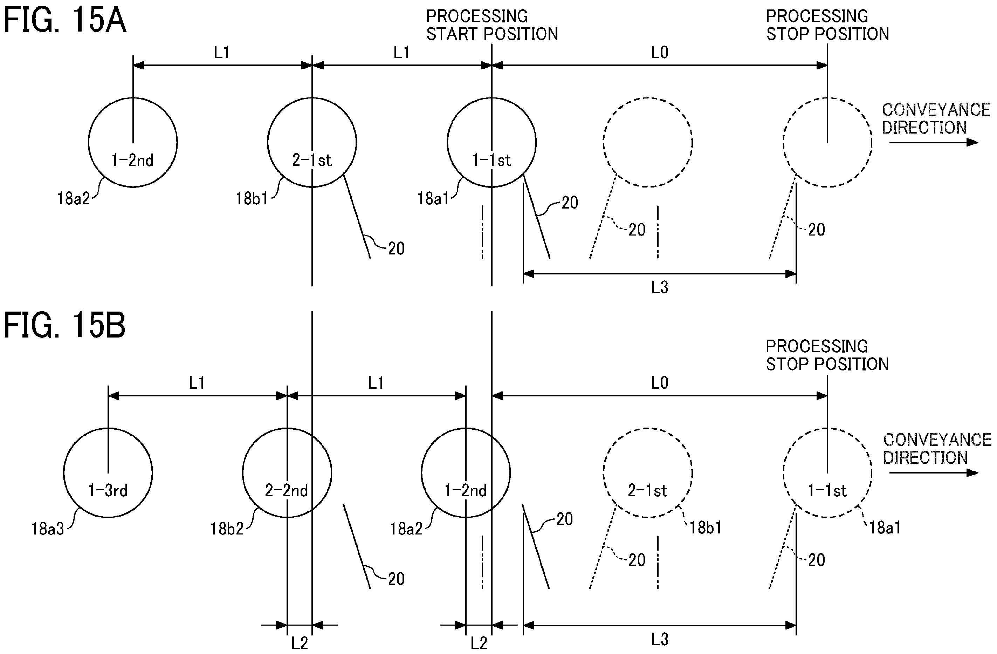

FIGS. 15A and 15B are schematic diagrams each illustrating an arrangement of objects in a laser processing method using multiple laser devices 11 according to the third embodiment of the present disclosure. In FIGS. 15A and 15B, multiple laser devices 11 are disposed in the conveyance direction, and a first object 18a1 (1 - 1st) to be processed by a (first) laser device 11 with a laser beam and a first object 18a2 (1 - 2nd) to be processed by a (second) laser device 11 with a laser beam are conveyed in this order.

The first object 18a1 (1 - 1st) is processed by the (first) laser device 11 with the laser beam, and at the same time, the first object 18a2 (1 - 2nd) is processed by the (second) laser device 11 with the laser beam.

When the processing of the first object 18a1 (1 - 1st) processed by the (first) laser device 11 and the processing of the first object 18a2 (1 - 2nd) processed by the (second) laser device 11 are stopped, a second object 18b1 (2 - 1st) to be processed by the (first) laser device 11 and a second object 18b2 (2 - 2nd) to be processed by the (second) laser device 11 are located upstream from the processing start position of the first object 18a1 (1 - 1st) processed by the (first) laser device 11 and the processing start position of the first object 18a2 (1 - 2nd) processed by the (second) laser device 11. Since the positional relation described above is maintained, each interval to process the second object 18b1 (2 - 1st) to be processed by the (first) laser device 11 and the second object 18b2 (2 - 2nd) to be processed by the (second) laser device 11 after the first object 18a1 (1 - 1st) and the first object 18a2 (1 - 2nd) have been processed by the (first) laser device 11 and the (second) laser device 11, respectively, are calculated by dividing the standby distance L2 (m) by a conveyance velocity V (m/s) of the object by (i.e., L2/S [s]).

Further, when the time for a mirror 13a (i.e., scanning mirror) such as a galvano mirror to return (jump) to the processing start position from the processing stop position is t1 and the computation time of the processing data adjusted to the detected position of the object and the orientation of the object after the position of the object and the orientation of the object are detected is t2, the maximum value of each of the processing times is L2/V (s).

The distance L1 between the first object 18a and the second object 18b varies depending on the accuracy of the arrangement of the object on the conveyor. When the distance L0 is larger than the distance L1 (i.e., L0 > L1), the standby distance L2 is less than 0 (i.e., the standby distance L2 < 0). Since the laser processing apparatus 10 includes the detector 16, the standby time L2 (s) can be calculated based on a time t3 [s] between a time when the first object 18a passes through the detector 16 and a time when the second object 18b passes through the detector 16 and the conveyance velocity V (m/s).

When the standby distance L2 is less than 0 (i.e., the standby distance L2 < 0), laser processing is not performed on the object 18. The object 18 is conveyed downstream as it is and determined as a rejected product by an inspection device disposed downstream. The object 18 is not shipped.

In the laser processing method according to the third embodiment, when the laser processing apparatus 10 includes the multiple laser devices 11, the maximum distance L0max of the distance L0 is the sum of L3 and W, where L3 is the effective lens diameter and W is the processing width W (i.e., the maximum distance L0max = L3 + W). Since the processing width W is equivalent to the effective lens diameter L3, the maximum distance L0max is the effective lens diameter L3 times two (i.e., the maximum distance L0max $\times$2). For example, in an f920 lens, since the effective lens diameter L3 is 470 mm, the maximum distance L0max is 940 mm (= 470 mm $\times$ 2). On the other hand, since the minimum distance L0min of the distance L0 is a condition that an object is not subject to the follow-up processing, the minimum distance L0min is 0 mm (i.e., L0min = 0 mm).

In the laser processing method according to an embodiment of the present disclosure, when multiple objects including the first object and the second objects are processed by the multiple laser beams 20, the processing start time of the multiple objects 18 to be processed can be sufficiently obtained from the processing stop time of the multiple objects 18 processed. Since the scanning time of the scanner, the position information on the multiple objects 18, and the orientation information on the multiple objects 18 can be appropriately corrected, the occurrence of a defective product can be prevented.

Although the embodiments of the present disclosure have been described above, the embodiments have been presented as examples, and the present disclosure is not limited by the embodiments. Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims. These embodiments and modifications thereof are included in the invention described in the claims.

**Claims**

1. A laser processing method comprising:

   conveying a first object and a second object in a conveyance direction;
   detecting the first object (18a) conveyed to a predetermined position by a detector (16);

detecting the second object (18b) conveyed to the predetermined position by the detector (16) following the detecting the first object (18a); and **characterized by** the steps of

determining a processing start position of the second object (18b) from:

a period of time (t3) from a time of the detecting the first object (18a) to a time of the detecting the second object (18b);
a conveyance velocity of the first object (18a); and
a conveyance velocity of the second object (18b); and

scanning and irradiating the second object (18b) with a laser beam (20) from the processing start position to a processing stop position within an effective lens diameter of a light condenser (15).

2. The laser processing method according to claim 1,

wherein the conveying conveys multiple objects including the first object (18a) and the second object (18b),
a distance L1 is a distance between the first object (18a) and the second object (18b) conveyed in the conveyance direction,
wherein the distance L1 includes:

an average value L1ave of distances between multiple objects (18) conveyed in the conveyance direction;
a minimum value L1min of the distance L1; and
a maximum value L1max of the distance L1.

3. The laser processing method according to claim 2,
wherein the minimum value L1min and a distance L0 from the processing start position to the processing stop position satisfy an expression (I) below:

$$L0 \leq L1min \quad (I).$$

4. The laser processing method according to claim 2,
wherein a distance L0 from the processing start position to the processing stop position, the minimum value L1min, and the maximum value L1max satisfy an expression (II) below:

$$L1min \leq L0 \leq L1max \quad (II).$$

5. The laser processing method according to claim 1, further comprising:

scanning and irradiating the first object (18a) with multiple laser beams from a processing start position to a processing stop position of the first object (18a),
wherein a distance L0 from the processing start position to the processing stop position and a distance L1 from the first object (18a) to the second object (18b) satisfy an expression (III) below:

$$L0 \leq N \cdot L1 \quad (III),$$

where N represents a number of the multiple laser beams (20) and an integer of two or more.

6. The laser processing method according to claim 1,
wherein each of the first object (18a) and the second object (18b) is a container.

7. A laser processing apparatus comprising:

a conveyor to convey at least a first object (18a) or a second object (18b) in this order;
a laser device (11) including:

a laser light source to emit a laser beam; and
a light condenser (15) to condense the laser beam emitted from the laser light source to irradiate and process the first object (18a) and the second object (18b) with the laser beam;

a detector (16) to:

detect the first object (18a) conveyed to a predetermined position;
detect the second object (18b) conveyed to the predetermined position; and

**characterized by**:

circuitry configured to determine a processing start position of the second object (18b) from:

a period of time (t3) from a time the detector detecting the first object (18a) to a time the detector detecting the second object (18b);
a conveyance velocity of the first object (18a) by the conveyor; and
a conveyance velocity of the second object (18b) by the conveyor,

wherein the laser device (11) scans and irradiates the second object (18b) with the laser beam (20) from the processing start position to the processing stop position within an effective lens diameter of the light condenser (15).

**Patentansprüche**

1. Laserbearbeitungsverfahren, das umfasst:

Fördern eines ersten Objekts und eines zweiten Objekts in einer Förderrichtung;
Erfassen des an eine vorgegebene Position beförderten ersten Objekts (18a) durch einen Detektor (16);
Erfassen des zweiten Objekts (18b), das durch den Detektor (16) an die vorgegebene Position befördert wurde, im Anschluss an das Erfassen des ersten Objekts (18a);
Bestimmen einer Verarbeitungsstartposition des zweiten Objekts (18b) aus:

einer Zeitspanne (t3) von einem Zeitpunkt der Erfassung des ersten Objekts (18a) bis zu einem Zeitpunkt der Erfassung des zweiten Objekts (18b);
einer Fördergeschwindigkeit des ersten Objekts (18a); und
einer Fördergeschwindigkeit des zweiten Objekts (18b); und

Abtasten und Bestrahlen des zweiten Objekts (18b) mit einem Laserstrahl (20) von der Bearbeitungsstartposition aus zu einer Bearbeitungsendposition innerhalb eines effektiven Linsendurchmessers eines Lichtkondensors (15).

2. Laserbearbeitungsverfahren nach Anspruch 1,

wobei das Fördern mehrere Objekte einschließlich des ersten Objekts (18a) und des zweiten Objekts (18b) fördert,
eine Distanz L1 eine Distanz zwischen dem in Förderrichtung geförderten ersten Objekt (18a) und dem zweiten Objekt (18b) ist,
wobei die Distanz L1 umfasst:

einen Durchschnittswert L1ave von Abständen zwischen mehreren in Förderrichtung geförderten Objekten (18);
einen Minimalwert L1min der Entfernung L1; und
einen Maximalwert L1max der Entfernung L1.

3. Laserbearbeitungsverfahren nach Anspruch 2,
wobei der Minimalwert L1min und eine Distanz L0 von der Bearbeitungsstartposition zu der Bearbeitungsendposition dem folgenden Ausdruck (I) genügen:

$$L0 \leq L1\min \text{ (I)}.$$

**4.** Laserbearbeitungsverfahren nach Anspruch 2,
wobei eine Distanz L0 von der Bearbeitungsstartposition zu der Bearbeitungsendposition, der Minimalwert L1min und der Maximalwert L1max einem Ausdruck (II) unten genügen:

$$L\,1\min \leq L0 \leq L1\max \text{ (II)}.$$

**5.** Laserbearbeitungsverfahren nach Anspruch 1, das weiterhin umfasst:

Scannen und Bestrahlen des ersten Objekts (18a) mit mehreren Laserstrahlen von einer Bearbeitungsstartposition bis zu einer Bearbeitungsendposition des ersten Objekts (18a),
wobei ein Abstand L0 von der Bearbeitungsstartposition zu der Bearbeitungsendposition und ein Abstand L1 von dem ersten Objekt (18a) zu dem zweiten Objekt (18b) einem Ausdruck (III) unten genügen:

$$L0 \leq N \cdot L1 \text{ (III)},$$

wobei N eine Anzahl mehrerer Laserstrahlen (20) und eine Ganzzahl von zwei oder höher ist.

**6.** Laserbearbeitungsverfahren nach Anspruch 1,
wobei das erste Objekt (18a) und das zweite Objekt (18b) jeweils ein Behälter sind.

**7.** Laserbearbeitungsvorrichtung, die umfasst:

einen Förderer zum Fördern von mindestens einem ersten Objekt (18a) oder einem zweiten Objekt (18b) in dieser Reihenfolge;
eine Laservorrichtung (11), die umfasst:

eine Laserlichtquelle zum Aussenden eines Laserstrahls; und
einen Lichtkondensor (15) zum Sammeln des von der Laserlichtquelle emittierten Laserstrahls, um das erste Objekt (18a) und das zweite Objekt (18b) mit dem Laserstrahl zu bestrahlen und zu bearbeiten;

einen Detektor (16) zum:

Erkennen des an eine vorgegebene Position beförderten ersten Objekts (18a);
Erkennen des an die vorgegebene Position beförderten zweiten Objekts (18b); und

eine Schaltung, die dazu konfiguriert ist, eine Bearbeitungsstartposition des zweiten Objekts (18b) aus folgenden Elementen zu bestimmen:

einer Zeitspanne (t3) von einem Zeitpunkt, an dem der Detektor das erste Objekt (18a) erkennt, bis zu einem Zeitpunkt, an dem der Detektor das zweite Objekt (18b) erkennt;
einer Fördergeschwindigkeit des ersten Objekts (18a) durch den Förderer; und
einer Fördergeschwindigkeit des zweiten Objekts (18b) durch den Förderer,

wobei die Laservorrichtung (11) das zweite Objekt (18b) mit dem Laserstrahl (20) von der Bearbeitungsstartposition bis zur Bearbeitungsendposition innerhalb eines effektiven Linsendurchmessers des Lichtkondensors (15) abtastet und bestrahlt.

**Revendications**

**1.** Procédé de traitement au laser comprenant :

le transport d'un premier objet et d'un deuxième objet dans une direction de transport ;
la détection du premier objet (18a) transporté jusqu'à une position prédéterminée par un détecteur (16) ;

la détection du deuxième objet (18b) transporté jusqu'à la position prédéterminée par le détecteur (16) à la suite de la détection du premier objet (18a) ; et **caractérisé par** les étapes suivantes

la détermination d'une position de démarrage de traitement du deuxième objet (18b) d'après :

une période (t3) d'un moment de la détection du premier objet (18a) à un moment de la détection du deuxième objet (18b) ;
une vitesse de transport du premier objet (18a) ; et
une vitesse de transport du deuxième objet (18b) ; et

le balayage et l'irradiation du deuxième objet (18b) avec un faisceau laser (20) de la position de démarrage de traitement à une position d'arrêt de traitement au sein d'un diamètre de lentille effectif d'un condenseur de lumière (15).

2. Procédé de traitement au laser selon la revendication 1,

dans lequel le transport transporte de multiples objets incluant le premier objet (18a) et le deuxième objet (18b),
une distance L1 est une distance entre le premier objet (18a) et le deuxième objet (18b) transportés dans la direction de transport,
dans lequel la distance L1 inclut :

une valeur moyenne L1ave de distances entre de multiples objets (18) transportés dans la direction de transport ;
une valeur minimale L1min de la distance L1 ; et
une valeur maximale L1max de la distance L1.

3. Procédé de traitement au laser selon la revendication 2,
dans lequel la valeur minimale L1min et une distance L0 de la position de démarrage de traitement à la position d'arrêt de traitement satisfont une expression (I) ci-dessous :

$$L0 \leq L1min \qquad (I).$$

4. Procédé de traitement au laser selon la revendication 2,
dans lequel une distance L0 de la position de démarrage de traitement à la position d'arrêt de traitement, la valeur minimale L1min, et la valeur maximale L1max satisfont une expression (II) ci-dessous :

$$L1min \leq L0 \leq Lmax \qquad (II).$$

5. Procédé de traitement au laser selon la revendication 1, comprenant en outre :

le balayage et l'irradiation du premier objet (18a) avec de multiples faisceaux laser d'une position de démarrage de traitement à une position d'arrêt de traitement du premier objet (18a),
dans lequel une distance L0 de la position de démarrage de traitement à la position d'arrêt de traitement et une distance L1 du premier objet (18a) au deuxième objet (18b) satisfont une expression (III) ci-dessous :

$$L0 \leq N \cdot L1 \qquad (III),$$

où N représente un nombre des multiples faisceaux laser (20) et un entier de deux ou plus.

6. Procédé de traitement au laser selon la revendication 1,
dans lequel chacun du premier objet (18a) et du deuxième objet (18b) est un récipient.

7. Appareil de traitement au laser comprenant :

un transporteur pour transporter au moins un premier objet (18a) ou un deuxième objet (18b) dans cet ordre ;
un dispositif laser (11) incluant :

une source de lumière laser pour émettre un faisceau laser ; et
un condenseur de lumière (15) pour condenser le faisceau laser émis à partir de la source de lumière laser pour irradier et traiter le premier objet (18a) et le deuxième objet (18b) avec le faisceau laser ;

un détecteur (16) pour :

détecter le premier objet (18a) transporté jusqu'à une position prédéterminée ;
détecter le deuxième objet (18b) transporté jusqu'à la position prédéterminée ; et **caractérisé par** :

une circuiterie configurée pour déterminer une position de démarrage de traitement du deuxième objet (18b) d'après :

une période (t3) d'un moment du détecteur détectant le premier objet (18a) à un moment du détecteur détectant le deuxième objet (18b) ;
une vitesse de transport du premier objet (18a) par le transporteur ; et
une vitesse de transport du deuxième objet (18b) par le transporteur,

dans lequel le dispositif laser (11) balaye et irradie le deuxième objet (18b) avec le faisceau laser (20) de la position de démarrage de traitement à la position d'arrêt de traitement au sein d'un diamètre de lentille effectif du condenseur de lumière (15).

# FIG. 1

EP 4 400 247 B1

# FIG. 2

# FIG. 3A

# FIG. 3B

# FIG. 3C

CRYSTALLIZATION

# FIG. 3D

FOAMING

# FIG. 4

PROCESSING
START POSITION

PROCESSING
STOP POSITION

L1

L0

2nd

1st

CONVEYANCE
DIRECTION

18b

18a

20

20

# FIG. 5

PROCESSING
START POSITION

PROCESSING
STOP POSITION

L1

L1

3rd

2nd

1st

CONVEYANCE
DIRECTION

18c

18b

20

18a

20

L2

# FIG. 6

PROCESSING
START POSITION

PROCESSING
STOP POSITION

L1

L0

2nd

1st

CONVEYANCE
DIRECTION

18b

18a

20

20

W/2

W/2

W/2

L3

W

# FIG. 7

START

DETECT A FIRST OBJECT —S1

DETERMINE A PROCESSING START
POSITION OF A SECOND OBJECT —S2

IRRADIATE THE SECOND
OBJECT WITH A LASER BEAM —S3

CONVEY THE SECOND OBJECT —S4

END

FIG. 8A

PROCESSING START POSITION

PROCESSING STOP POSITION

L1min

L0

2nd

1st

18b

18a

20

20

CONVEYANCE DIRECTION

FIG. 8B

PROCESSING START POSITION

PROCESSING STOP POSITION

L1

L1min

3rd

2nd

1st

18c

18b

18a

20

20

CONVEYANCE DIRECTION

EP 4 400 247 B1

FIG. 9A

PROCESSING START POSITION

PROCESSING STOP POSITION

L1

L1min

3rd

2nd

1st

CONVEYANCE DIRECTION

18c

18b

18a

20

20

FIG. 9B

PROCESSING START POSITION

PROCESSING STOP POSITION

L1

L0

3rd

2nd

2nd

CONVEYANCE DIRECTION

18c

18b

20

20

L3

EP 4 400 247 B1

## FIG. 10A

[L0 ≤ L1max]

PROCESSING START POSITION

PROCESSING STOP POSITION

2nd

1st

CONVEYANCE DIRECTION

18b

18a

20

20

## FIG. 10B

[L1 ≤ L1max]

PROCESSING START POSITION

PROCESSING STOP POSITION

L1

L1max

3rd

2nd

1st

CONVEYANCE DIRECTION

18c

18b

18a

20

20

EP 4 400 247 B1

FIG. 11A

PROCESSING START POSITION

PROCESSING STOP POSITION

L1

L1max

3rd

2nd

1st

CONVEYANCE DIRECTION

18c

18b

20

20

18a

20

FIG. 11B

PROCESSING START POSITION

PROCESSING STOP POSITION

L1

L0

3rd

2nd

CONVEYANCE DIRECTION

18c

18b

20

20

L3/2

FIG. 12A

PROCESSING
START POSITION

PROCESSING
STOP POSITION

L0

L1min=D

18a

2nd

1st

18b

20

20

CONVEYANCE
DIRECTION

FIG. 12B

PROCESSING
START POSITION

PROCESSING
STOP POSITION

L1

L0

δ

L0/2

18a

D

3rd

2nd

1st

18c

18b

20

20

L3/2

W/2

CONVEYANCE
DIRECTION

FIG. 13A

PROCESSING
START POSITION

PROCESSING
STOP POSITION

L1min — L1max — L0

3rd — 2nd — 1st

18c — 18b — 18a — 20 — 20

CONVEYANCE
DIRECTION

FIG. 13B

PROCESSING
START POSITION

PROCESSING
STOP POSITION

2·L1

D — L1max

L0/2

3rd — 2nd — 1st

18c — 18b — 20 — 20

W/2 — L3/2

CONVEYANCE
DIRECTION

EP 4 400 247 B1

FIG. 14A

FIG. 14B

FIG. 15A

PROCESSING START POSITION

PROCESSING STOP POSITION

CONVEYANCE DIRECTION

FIG. 15B

PROCESSING STOP POSITION

CONVEYANCE DIRECTION

EP 4 400 247 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021037685 A

- US 2019283451 A